# NEUE EUROPÄISCHE PATENTSCHRIFT

(11) **EP 2 674 584 B2**
(45) Veröffentlichungstag und Bekanntmachung des Hinweises auf die Entscheidung über den Einspruch: **29.04.2020**
(45) Hinweis auf die Patenterteilung: 09.08.2017
(21) Anmeldenummer: 12171948.8
(22) Anmeldetag: 14.06.2012
(51) Int. Cl.: B01J 35/00, B01J 23/42, B01J 23/52, B01D 53/94, B01J 29/072, F01N 3/20

(54) **Verwendung eines Oxidationskatalysators zur Verhinderung der Kontamination eines SCR-Katalysators mit Platin**
Use of an oxidation catalyst for preventing the contamination of an SCR catalyst with platinum
Utilisation d'un catalyseur à oxydation pour la prévention de la contamination d'un catalyseur SCR avec platine

(43) Veröffentlichungstag der Anmeldung: 18.12.2013
(73) Patentinhaber: Umicore AG & Co. KG, 63457 Hanau-Wolfgang (DE)
(72) Erfinder: SCHUETZE, Frank-Walter, 63808 Haibach (DE); PFEIFER, Marcus, 42719 Solingen (DE); SCHIFFER, Michael, 63450 Hanau (DE); SYMALLA, Martin, 64291 Darmstadt (DE); HENGST, Christoph, 35510 Butzbach (DE)

(56) Entgegenhaltungen:
- EP-A1- 1 925 362
- WO-A1-2008/117941
- WO-A1-2009/136206
- WO-A1-2013/088133
- WO-A1-2013/088133
- WO-A2-2013/050784
- JP-A- 2010 211 946
- US-A- 2 730 189
- US-A1- 2009 288 402
- US-A1- 2010 183 490
- US-A1- 2010 290 964
- US-A1- 2011 138 777
- US-A1- 2011 143 921
- US-A1- 2011 206 584

## Beschreibung

Die vorliegende Erfindung betrifft die Verwendung eines Oxidationskatalysators, der an seinem abströmseitigen Ende eine Materialzone umfasst, die im Abgasstrom enthaltene Platinspuren entfernt, zur Verhinderung der Kontamination des SCR-Katalysators mit Platin in einem Abgasbehandlungssystem, das anströmseitig zum SCR-Katalysator den Platin enthaltenden Oxidationskatalysator umfasst.

Das Abgas von mit Dieselmotoren betriebenen Kraftfahrzeugen enthält neben Kohlenmonoxid (CO) und Stickoxiden (NOₓ) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, die als "Dieselruß" oder "Russpartikel" bezeichnet werden.

Zur Reinigung dieser Abgase müssen die genannten Bestandteile möglichst vollständig in unschädliche Verbindungen umgewandelt werden, was nur unter Einsatz geeigneter Katalysatoren möglich ist.

So können Kohlenmonoxid (CO), gasförmige Kohlenwasserstoffe (HC) und gegebenenfalls den Russpartikeln anhaftende organische Agglomerate (sog. "Volatile Organic Fraction" VOF) mit Hilfe von Oxidationskatalysatoren oxidativ entfernt werden. Oxidationskatalysatoren sind im Stand der Technik seit langem bekannt und in den verschiedensten Ausführungsformen beschrieben. Zumeist werden die Edelmetalle Platin und/oder Palladium als oxidationskatalytisch aktive Komponenten eingesetzt (siehe zum Beispiel US2011/0206584 A1), aber auch zusätzlich Gold enthaltende Katalysatoren sind schon beschrieben, beispielsweise in der EP 1 938 893 A2.

Zur Entfernung von Partikelemissionen aus dem Abgas von Dieselfahrzeugen werden spezielle Partikelfilter eingesetzt, die zur Verbesserung ihrer Eigenschaften mit einer oxidationskatalytisch aktiven Beschichtung versehen sein können. Eine solche Beschichtung dient, wie in der SAE-Schrift SAE 2005-01-1756 ausführlich beschrieben, der Erniedrigung der Aktivierungsenergie für den sauerstoffbasierten Partikelabbrand (Russverbrennung) und somit der Absenkung der Russzündtemperatur auf dem Filter, der Verbesserung des passiven Regenerationsverhaltens durch Oxidation von im Abgas enthaltenen Stickstoffmonoxid zu Stickstoffdioxid und der Unterdrückung von Durchbrüchen von Kohlenwasserstoff- und Kohlenmonoxidemissionen.

Stickoxide aus Abgasen von Dieselmotoren können beispielsweise mittels selektiver katalytischer Reduktion (Selective Catalytic Reduktion, SCR) mit Ammoniak als Reduktionsmittel an einem geeigneten Katalysator, dem SCR-Katalysator, zu unschädlichem Stickstoff umgesetzt werden. Das Reduktionsmittel muss aus einem mitgeführten Zusatztank mittels einer Einspritzdüse vor dem SCR-Katalysator in den Abgasstrang eindosiert werden. Bevorzugt wird aber nicht Ammoniak selbst mitgeführt, sondern eine leicht zu Ammoniak zersetzliche Verbindung wie zum Beispiel Harnstoff oder Ammoniumcarbamat.

Damit die angesprochenen schädlichen Abgaskomponenten im erforderlichen Ausmaß entfernt werden können, müssen die genannten Katalysatoren bzw. Filter in geeigneter Weise zu einem Abgasbehandlungssystem miteinander kombiniert werden.

In bekannten Abgasbehandlungssystemen, die beispielsweise in der WO99/39809 und der WO2009/140989 beschrieben sind, werden in Strömungsrichtung des Abgases zuerst der Oxidationskatalysator, sodann das Dieselpartikelfilter und schließlich der SCR-Katalysator angeordnet. Zwischen Dieselpartikelfilter und SCR-Katalysator befindet sich darüber hinaus noch eine Einspritzvorrichtung zum Zudosieren des Reduktionsmittels. Je nach Anforderung können aber auch Lösungen ohne Dieselpartikelfilter in Frage kommen. In diesen Fällen umfasst das Abgasbehandlungssystem in Strömungsrichtung des Abgases zuerst einen Oxidationskatalysator und dann den SCR-Katalysator. Die Einspritzvorrichtung zum Zudosieren des Reduktionsmittels ist in diesem Fall zwischen Oxidationskatalysator und SCR-Katalysator angeordnet.

Beim Betrieb dieser Systeme zeigt sich, dass der Oxidationskatalysator, insbesondere wenn er platinreich ist, bei hohen Temperaturen und abhängig vom λ-Wert Spuren von Platin in die Gasphase abgibt, die mit dem Abgasstrom zum SCR-Katalysator transportiert werden und diesen kontaminieren. Da Platin eine hohe Aktivität zur Oxidation von Ammoniak aufweist, führt das dazu, dass bei Temperaturen oberhalb von ca. 300°C nicht mehr ausreichend Ammoniak für die SCR-Reaktion zur Verfügung steht und der Umsatz von Stickoxiden abnimmt. Außerdem wird eine erhöhte Bildung von Distickstoffmonoxid (N₂O) vornehmlich im Temperaturbereich um 250°C beobachtet. Dieses Phänomen ist zum Beispiel in den SAE-Schriften SAE 2008-01-2488 und SAE 2009-01-0627 beschrieben.

Zur Lösung dieses Problems schlägt die US2011/138777 A1 vor, in das Abgassystem nach dem Oxidationskatalysator und vor dem SCR-Katalysator eine "Platingruppenmetallfalle" anzuordnen, die als wirksame Bestandteile Ceroxid oder ein Perovskit-Material enthält.
Allerdings hat dies den Nachteil, dass das Abgasbehandlungssystem durch ein zusätzliches Bauteil ergänzt werden muss, was im Hinblick auf den beschränkten Raum im Unterboden eines Fahrzeuges nur schwer zu realisieren ist. Außerdem führt diese Lösung zu höheren Kosten.

Aufgabe der vorliegenden Erfindung ist es somit, Maßnahmen zur Verfügung zu stellen, die es erlauben, vom Oxidationskatalysator oder anderen Bauteilen abgegebene Platinspuren zu entfernen und eine Kontamination des SCR-Katalysators zu verhindern, ohne dass damit zusätzliche Bauteile nötig sind oder wesentlich höhere Kosten verursacht werden. Im Übrigen soll die Funktion des gesamten Abgasbehandlungssystems bzw. seiner einzelnen Bestandteile möglichst unbeeinflusst bleiben.

Es wurde nun überraschend gefunden, dass diese Aufgabe gelöst wird, wenn man einen Oxidationskatalysator verwendet, in den ein geeigneter Platinfänger integriert ist.

Die vorliegende Erfindung betrifft demnach die Verwendung eines Oxidationskatalysators, der an seinem abströmseitigen Ende eine Materialzone umfasst, die im Abgasstrom enthaltene Platinspuren entfernt, wobei die Materialzone, die im Abgasstrom enthaltene Platinspuren entfernt, als zusätzliche Schicht auf der oxidationskatalytisch aktiven Beschichtung des Oxidationskatalysators vorliegt und diese ausgehend vom abströmseitig angeordneten Ende des Oxidationskatalysators 50 bis 100% ihrer Gesamtlänge überdeckt und wobei der Oxidationskatalysator ein Durchflusssubstrat ist, das oxidationskatalytisch aktive Komponenten in Form einer oder mehrerer Beschichtungen trägt und wobei die Materialzone, die im Abgasstrom enthaltene Platinspuren entfernt, als aktiven Bestandteil Palladium, Gold oder Mischungen davon enthält, zur Verhinderung der Kontamination des SCR-Katalysators mit Platin in einem Abgasbehandlungssystem, das anströmseitig zum SCR-Katalysator einen Platin enthaltenden Oxidationskatalysator umfasst.

Oxidationskatalysatoren im Rahmen der vorliegenden Erfindung sind Durchflusssubstrate, die oxidationskatalytisch aktive Komponenten in Form einer oder mehrerer Beschichtungen tragen. Als oxidationskatalytisch aktive Bestandteile enthalten sie Platin, können daneben aber auch noch ein oder mehrere andere Platingruppenelemente, insbesondere Palladium und/oder Rhodium oder beispielsweise Gold enthalten. Die oxidationskatalytisch aktiven Bestandteile liegen auf dem Substrat auf einem hochoberflächigen, inerten Trägermaterial geträgert vor. Eine besonders bevorzugte oxidationskatalytisch aktive Beschichtung enthält Platin auf Aluminiumoxid.

Die erfindungsgemäße Verwendung ist von besonderem Vorteil, wenn die oxidationskatalytisch aktive Beschichtung "platin-reich" ist, wenn sie also als oxidationskatalytisch aktive Bestandteile ausschließlich Platin enthält oder Platin in Mischung mit anderen Bestandteilen, wobei Platin im Überschuss vorliegt.

Häufig werden Mischungen aus Platin und Palladium verwendet, wobei das Gewichtsverhältnis von Platin zu Palladium bei 12:1 bis 4:1 liegt.

Die gesamte Beladung mit oxidationskatalytisch aktiven Metallen liegt bevorzugt bei 0,53 bis 3,53 g/l (15 bis 100 g/ft³ ) bezogen auf das Volumen der oxidationskatalytisch aktiven Beschichtung.

Neben den oxidationskatalytisch aktiven Komponenten können die Oxidationskatalysatoren im Rahmen vorliegender Erfindung auch Komponenten enthalten, die unter mageren, d.h. sauerstoffreichen Abgasbedingungen Stickoxide chemisch binden und unter fetten, d.h. sauerstoffarmen Abgasbedingungen wieder freisetzen können. Solche Komponenten sind als Stickoxidspeicherkomponenten bekannt und bevorzugt Oxide, Carbonate oder Hydroxide der Alkalimetalle, der Erdalkalimetalle und der Seltenerdmetalle, wobei Barium und Strontium besonders bevorzugt sind.

Somit können die Oxidationskatalysatoren im Rahmen der vorliegenden Erfindung auch eine LNT-Funktion (Lean NOx Trap) beinhalten.

Die Durchflusssubstrate können aus Metall und insbesondere aus keramischen Materialien bestehen. Bevorzugt bestehen sie aus Cordierit, aus Siliciumcarbid, aus Mullit oder aus Aluminiumtitanat. Solche Substrate sind in der Literatur zahlreich beschrieben und im Handel erhältlich.

Dieser Oxidationskatalysator wird nun mit einer zusätzlichen Materialzone versehen, die die im Abgasstrom enthaltenen Platinspuren entfernt, und erfindungsgemäß verwendet.

Diese Materialzone liegt als zusätzliche Schicht auf der homogen über die gesamte Länge des Substrates verteilten oxidationskatalytisch aktiven Beschichtung vor und überdeckt diese ausgehend vom abströmseitig angeordneten Ende des Oxidationskatalysators 50% bis 100% der Gesamtlänge des Durchflusssubstrats.

Die Materialzone, die die im Abgasstrom enthaltenen Platinspuren entfernt, ist dabei immer abströmseitig angeordnet, sie weist also im Abgasbehandlungssystem in Richtung des SCR-Katalysators.

Die Materialzone, die im Abgasstrom enthaltene Platinspuren entfernt, enthält als aktiven Bestandteil Palladium, Gold oder Mischungen davon, besonders bevorzugt Palladium oder Mischungen aus Palladium und Gold. Bevorzugt ist sie frei von weiteren katalytisch aktiven Bestandteilen. Allerdings liegen die genannten aktiven Bestandteile zur Erhöhung der Effizienz als Platinfänger bevorzugt hochdispers auf typischen Trägeroxiden vor. Dies wird unten näher beschrieben. Im frischen Zustand, d.h. bevor der Oxidationskatalysator in Gebrauch genommen wird, ist die Materialzone frei von Platin. Mit zunehmender Gebrauchsdauer sammeln sich selbstverständlich die aus dem Abgas entfernten Platinspuren an, diese liegen allerdings erfahrungsgemäß nur im ppm Bereich und sind somit für die meisten katalytischen Funktionen nicht oder nur unzureichend wirksam.

Die zu verwendenden Mengen an Palladium, Gold bzw. Mischungen davon hängen von den konkreten Erfordernissen des betrachteten Abgasbehandlungssystems ab. In der Regel betragen die Mengen aber 0,02 bis 0,21 g/l (0,5 bis 6 g/ft³), bevorzugt 0,04 bis 0,11 g/l (1 bis 3 g/ft³) (die Mengen beziehen sich auf das Substratvolumen, das von der Materialzone bzw. -Schicht eingenommen wird.

Wird als aktiver Bestandteil eine Mischung aus Palladium und Gold eingesetzt, so liegt das Gewichtsverhältnis von Palladium zu Gold bevorzugt bei 0,9 -1,1 : 1 und besonders bevorzugt bei 1 : 1.

In einer bevorzugten Ausführungsform der vorliegenden Erfindung beträgt der Gewichtsanteil von Gold bei 50% oder weniger (also beispielsweise 10, 20, 30, 40 oder 45%) der gesamten Edelmetallbeladung des Oxidationskatalysators.

Die gesamte Beladung der Materialzone, die die im Abgasstrom enthaltenen Platinspuren entfernt, mit Palladium, Gold oder Mischungen davon liegt bevorzugt bei 0,53 bis 3,53 g/l (15 bis 100 g/ft³,) auf das Volumen der genannten Materialzone.

Palladium, Gold bzw. Mischungen davon liegen auf dem Substrat bevorzugt auf einem hochoberflächigen, inerten Trägeroxid geträgert vor. Geeignete Trägeroxide sind Aluminiumoxide, dotierte Aluminiumoxide, Titandioxid, Ceroxid, Zirkonoxid, Cer/Zirkon-Mischoxide, Siliciumdioxid oder Mischungen aus zwei oder mehreren der genannten Oxide. Diese sind dem Fachmann bekannt und im Handel erhältlich.

In einer bevorzugten Ausführungsform der erfindungsgemäßen Verwendung umfasst das Abgasbehandlungssystem in Strömungsrichtung des Abgases den oben beschriebenen, Platin enthaltenden Oxidationskatalysator, einen Dieselpartikelfilter und einen SCR-Katalysator.

Als Dieselpartikelfilter werden bevorzugt Wandflussfiltersubstrate verwendet. Das sind Wabenkörper mit wechselseitig gasdicht verschlossenen An- und Abströmkanälen, die durch poröse Wände begrenzt und voneinander abgetrennt sind. Das in die Anströmkanäle einströmende partikelhaltige Abgas wird durch einen auf der Austrittsseite befindlichen gasdichten Verschlussstopfen zum Durchtritt durch die poröse Wand gezwungen und tritt aus den auf der Anströmseite verschlossenen Abströmkanälen aus dem Wandflussfiltersubstrat wieder aus. Dabei wird Dieselruß aus dem Abgas herausgefiltert.

Die Wabenkörper können aus Metall und insbesondere aus keramischen Materialien bestehen. Bevorzugt bestehen sie aus Cordierit, aus Siliciumcarbid, aus Mullit oder aus Aluminiumtitanat. Solche Wabenkörper sind in der Literatur zahlreich beschrieben.

Dieselpartikelfilter können mit einer oxidationskatalytisch aktiven Beschichtung versehen sein. Solche Filter sind als cDPF (catalyzed Diesel Particulate Filter) bekannt und in der Literatur beschrieben. Als oxidationskatalytisch aktive Bestandteile weisen sie in der Regel ein oder mehrere Platingruppenelemente, insbesondere Platin, Palladium und/oder Rhodium auf. Diese liegen auf dem Filtersubstrat auf einem hochoberflächigen, inerten Trägermaterial geträgert in Form einer Beschichtung vor. Eine besonders bevorzugte oxidations-katalytisch aktive Beschichtung enthält Platin auf Aluminiumoxid.

Auch als SCR-Katalysator können konventionelle Produkte eingesetzt werden, die zahlreich beschrieben und dem Fachmann bekannt sind. Es handelt sich üblicherweise um Durchflusswabenkörper, auf die die katalytisch wirksamen Bestandteile in Form einer Beschichtung aufgebracht sind.

Es eignen sich SCR-Katalysatoren auf Basis von Vanadiumoxid oder auf Basis Vanadium-freier Mischoxide ebenso, wie solche auf Zeolith-Basis. SCR-Katalysatoren auf Zeolith-Basis sind bevorzugt, insbesondere solche, die mit Eisen und/oder Kupfer ausgetauscht sind.

In einer weiteren Ausführungsform der erfindungsgemäßen Verwendung umfasst das Abgasbehandlungssystem in Strömungsrichtung des Abgases den oben beschriebenen, Platin enthaltenden Oxidationskatalysator, sowie einen Dieselpartikelfilter, auf den ein SCR-Katalysator in Form einer Beschichtung aufgetragen ist. Unter Umständen kann dieses System abströmseitig zum Dieselpartikelfilter auch noch einen weiteren SCR-Katalysator umfassen.

Schließlich sind auch Ausführungsformen der erfindungsgemäßen Verwendung denkbar, in denen das Abgasbehandlungssystem in Strömungsrichtung des Abgases den oben beschriebenen, Platin enthaltenden Oxidationskatalysator, sowie abströmseitig dazu einen SCR-Katalysator umfasst, also kein Dieselpartikelfilter aufweist.

Die Aufbringung der katalytisch aktiven Beschichtung auf Durchflusswabenkörper und Filterkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff), die für diese Abgasreinigungsaggregate aus dem Stand der Technik hinreichend bekannt sind.

Der erfindungsgemäß verwendete Oxidationskatalysator eignet sich in hervorragender Weise zum nachhaltigen Schutz von SCR-Katalysatoren vor Kontamination mit Platin und damit vor Aktivitätsverlust.

### Beispiel 1 (nicht erfindungsgemäß)

Ein konventioneller, Platin-reicher Oxidationskatalysator mit einer Gesamtlänge von 101,6 mm, einer Edelmetallbeladung von 1,14 g/l (40g/ft³) und einem Pt/Pd Verhältnis von 6:1 wurde auf einem Drittel seiner Länge mittels eines konventionellen Tauchverfahrens mit einer zusätzlichen, Palladium und Gold enthaltenden Zone beschichtet. Die Beladungsmenge betrug 1,41 g/l (40g/ft³,) das Verhältnis Pd/Au 1:1.

Ein Bohrkern dieses Katalysators wurde anströmseitig zu einem Bohrkern eines konventionellen Fe-Zeolith enthaltenden SCR-Katalysators platziert und zwar dergestalt, dass die Pd/Au-Zone in Richtung des SCR-Katalysators wies.

Dieses Test-Abgasbehandlungssystem (nachstehend K1 genannt) wurde wie folgt getestet und mit einem System verglichen, in dem der Oxidationskatalysator keine zusätzliche Pd/Au-Zone aufwies, aber ansonsten identisch war (nachstehend VK1 genannt) verglichen:
Beide Systeme wurden zunächst bei einer Temperatur von 720°C anströmseitig des Oxidationskatalysators (entspricht 700°C abströmseitig des Oxidationskatalysators) für 12,5 Stunden einem Gas aus 10% Sauerstoff und 90% Stickstoff gealtert.

Sodann wurde die NOx-Umsetzungsrate des SCR-Katalysators, sowie die N₂O-Bildung bei 500°C, 250°C und 200°C in einer Modellgasanlage bestimmt.

Folgendes Modellgas wurde verwendet:
- NO 500ppm
- NO₂ -
- NH₃ 450ppm (alpha = 0,9)
- O₂ 5%
- H₂O 5%
- N₂ Rest

Der SCR-Katalysator des Vergleichssystems VK1 zeigte eine deutliche Platin-Kontamination, angezeigt durch einen Rückgang der NOx-Umsetzungsrate bei 500°C und einer erhöhten N₂O-Bildung bei 250°C.

Demgegenüber zeigte der SCR-Katalysator des Systems K1 diese Effekte nicht. Sowohl NOx-Umsetzungsrate, als auch N₂O-Bildung blieben auf dem gleichen Niveau wie das eines frischen SCR-Katalysators. Es gibt somit keine Anzeichen für eine Kontamination des SCR-Katalysators im System K1 mit Platin.

Somit ist offensichtlich, dass die zusätzliche Pd/Au-Zone auf dem Oxidationskatalysator den abströmseitigen SCR-Katalysator wirksam vor Platin-Kontamination schützt.
- O₂ 5%
- H₂O 5%
- N₂ Rest

Der SCR-Katalysator des Vergleichssystems VK1 zeigte eine deutliche Platin-Kontamination, angezeigt durch einen Rückgang der NOx-Umsetzungsrate bei 500°C und einer erhöhten N₂O-Bildung bei 250°C.

Demgegenüber zeigte der SCR-Katalysator des Systems K1 diese Effekte nicht. Sowohl NOx-Umsetzungsrate, als auch N₂O-Bildung blieben auf dem gleichen Niveau wie das eines frischen SCR-Katalysators. Es gibt somit keine Anzeichen für eine Kontamination des SCR-Katalysators im System K1 mit Platin.

Somit ist offensichtlich, dass die zusätzliche Pd/Au-Zone auf dem Oxidationskatalysator den abströmseitigen SCR-Katalysator wirksam vor Platin-Kontamination schützt.

## Patentansprüche

1. Verwendung eines Oxidationskatalysators, der an seinem abströmseitigen Ende eine Materialzone umfasst, die im Abgasstrom enthaltene Platinspuren entfernt, wobei die Materialzone, die im Abgasstrom enthaltene Platinspuren entfernt, als zusätzliche Schicht auf der oxidationskatalytisch aktiven Beschichtung des Oxidationskatalysators vorliegt und diese ausgehend vom abströmseitig angeordneten Ende des Oxidationskatalysators 50 bis 100% ihrer Gesamtlänge überdeckt und wobei der Oxidationskatalysator ein Durchflusssubstrat ist, das oxidationskatalytisch aktive Komponenten in Form einer oder mehrerer Beschichtungen trägt und wobei die Materialzone, die im Abgasstrom enthaltene Platinspuren entfernt, als aktiven Bestandteil Palladium, Gold oder Mischungen davon enthält, zur Verhinderung der Kontamination des SCR-Katalysators mit Platin in einem Abgasbehandlungssystem, das anströmseitig zum SCR-Katalysator den Platin enthaltenden Oxidationskatalysator umfasst.

2. Verwendung nach Anspruch 1, **dadurch gekennzeichnet, dass** Palladium, Gold bzw. Mischungen davon, bezogen auf das Volumen, das die Materialzone einnimmt, in Mengen von 0,018 bis 3,53 g/l (0,5 bis 100 g/ft³), vorliegen.

3. Verwendung nach Anspruch 1, **dadurch gekennzeichnet, dass** Palladium, Gold bzw. Mischungen davon, bezogen auf das Volumen, das die Materialzone einnimmt, in Mengen von 0,04 bis 0,11 g/l (1 bis 3 g/ft³) vorliegen.

4. Verwendung nach einem der Ansprüche 1 bis 3, **dadurch gekennzeichnet, dass** Palladium, Gold bzw. Mischungen davon auf einem hochoberflächigen, inerten Trägeroxid geträgert vorliegen, wobei das Trägeroxid Aluminiumoxid, dotiertes Aluminiumoxid, Titandioxid, Ceroxid, Zirkonoxid, Cer/Zirkon-Mischoxid, Siliciumdioxid oder eine Mischung aus zwei oder mehreren der genannten Oxide ist.

## Claims

1. Use of an oxidation catalyst that comprises at its downstream end a material zone that removes platinum traces contained in the exhaust gas flow, wherein the material zone that removes platinum traces contained in the exhaust gas flow is present as an additional layer on the oxidation-catalytically-active coating of the oxidation catalyst and covers 50 to 100% of its total length, starting from the end of the oxidation catalyst situated downstream; and wherein the oxidation catalyst is a through-flow substrate that bears oxidation-catalytically-active components in the form of one or more coatings; and wherein the material zone that removes platinum traces contained in the exhaust gas flow contains palladium, gold, or mixtures thereof as an active component to prevent contaminating the SCR catalyst with platinum in an exhaust gas treatment system that, upstream of the SCR catalyst, comprises the platinum-containing oxidation catalyst.

2. Use according to Claim 1, **characterized in that** palladium, gold, or mixtures thereof, in relation to the volume that the material zone occupies, are present in quantities of 0.018 to 3.53 g/L (0.5 to 100 g/ft³).

3. Use according to Claim 1, **characterized in that** palladium, gold, or mixtures thereof, in relation to the volume that the material zone occupies, are present in quantities of 0.04 to 0.11 g/L (1 to 3 g/ft³).

4. Use according to one of claims 1 through 3, **characterized in that** palladium, gold, or mixtures thereof are present so as to be supported on an inert carrier oxide having high surface area, wherein the carrier oxide is aluminum oxide, doped aluminum oxide, titanium oxide, cerium oxide, zirconium oxide, cerium/zirconium mixed oxide, silicon dioxide, or a mixture of two or more of the cited oxides.

## Revendications

1. Utilisation d'un catalyseur d'oxydation comprenant, à son extrémité côté aval, une zone de matériau, qui élimine les traces de platine contenues dans le flux de gaz d'échappement, la zone de matériau, qui élimine les traces de platine contenues dans le flux de gaz d'échappement, se présentant sous la forme d'une couche supplémentaire sur le revêtement à activité catalytique d'oxydation du catalyseur d'oxydation et recouvrant celui-ci à partir de l'extrémité située côté aval du catalyseur d'oxydation sur 50 à 100 % de sa longueur totale et le catalyseur d'oxydation étant un substrat d'écoulement, qui porte des composants à activité catalytique d'oxydation sous la forme d'un ou de plusieurs revêtements et la zone de matériau, qui élimine les traces de platine contenues dans le flux de gaz d'échappement, contenant du palladium, de l'or ou des mélanges de ceux-ci en tant que constituant actif, pour la prévention de la contamination du catalyseur SCR avec du platine dans un système de traitement de gaz d'échappement, qui comprend un catalyseur d'oxydation contenant du platine situé côté amont par rapport au catalyseur SCR.

2. Utilisation selon la revendication 1, **caractérisée en ce que** le palladium, l'or ou les mélanges de ceux-ci sont présents en des quantités allant de 0,018 à 3,53 g/l (0,5 à 100 g/pied³) par rapport au volume qu'occupe la zone de matériau.

3. Utilisation selon la revendication 1, **caractérisée en ce que** le palladium, l'or ou les mélanges de ceux-ci sont présents en des quantités allant de 0,04 à 0,11 g/l (1 à 3 g/pied³) par rapport au volume qu'occupe la zone de matériau.

4. Utilisation selon l'une quelconque des revendications 1 à 3, **caractérisée en ce que** le palladium, l'or ou les mélanges de ceux-ci sont présents supportés sur un oxyde porteur inerte à grande surface, l'oxyde porteur étant de l'oxyde d'aluminium, de l'oxyde d'aluminium dopé, du dioxyde de titane, de l'oxyde de cérium, de l'oxyde de zirconium, de l'oxyde mixte de cérium/zirconium, du dioxyde de silicium ou un mélange de deux ou plus des oxydes cités.
